# EUROPEAN PATENT APPLICATION

(11) **EP 4 535 058 A1**
(43) Date of publication of application: **09.04.2025**
(21) Application number: 22944517.6
(22) Date of filing: 01.09.2022
(51) Int. Cl.: G02B 7/18, G02B 7/04, G02B 27/64, G03B 5/00, G03B 13/34

(54) **PERISCOPE LENS DRIVING DEVICE, CAMERA DEVICE, AND MOBILE TERMINAL**

(30) Priority: 31.05.2022 CN 202210612558
(71) Applicant: Shanghai B.L Electronics Co., Ltd., Shanghai 201712 (CN)
(72) Inventor: GONG, Gaofeng, Shanghai 201712 (CN); WANG, Jianhua, Shanghai 201712 (CN); LING, Caisheng, Shanghai 201712 (CN)
(74) Representative: Zacco GmbH
(86) International application number: PCT/CN2022/116410
(87) International publication number: WO 2023/231206

(57) **Abstract**

A periscope lens driving apparatus, a camera apparatus, and a mobile terminal are provided. The periscope lens driving apparatus includes a housing assembly (10), the housing assembly (10) having an accommodating space. The periscope lens driving apparatus further includes, in the accommodating space: a prism bracket (20); a ball assembly (30), the ball assembly (30) abutting against the prism bracket (20), and the prism bracket (20) being movable relative to the ball assembly (30); a lens carrier (40), the lens carrier (40) being provided on a side, away from the ball assembly (30), of the prism bracket (20); a first driving assembly (50), at least a part of the first driving assembly (50) being provided on the prism bracket (20), and at least another part of the first driving assembly (50) being provided on the housing assembly (10); and a second driving assembly (60), at least a part of the second driving assembly (60) being provided on the lens carrier (40), and at least another part of the second driving assembly (60) being provided on the housing assembly (10). The problem in the related art of poor use performance of the periscope lens driving apparatus is solved.

## Description

### Technical Field

The present invention relates to the field of camera apparatuses, and in particular to a periscope lens driving apparatus, a camera apparatus, and a mobile terminal.

With the development of technology, many electronic devices today (such as tablet computers or smart phones) are equipped with lens modules and have camera or video functions. Lenses may be roughly classified into short focal length wide-angle lenses and long focal length telephoto lenses. However, placing a long focal length lens in an optical lens will increase the thickness of the electronic device, which is difficult to meet the requirements of a mobile terminal device for thinness and lightness. In the related art, a periscope design is usually adopted, that is, an optical path is laid flat and a turning mirror is added to rotate the optical path by 90 degrees, so that the entire optical system lies flat to reduce the overall height.

An existing periscope lens driving apparatus includes two parts: a reflection module (prism motor) and a lens module (periscope motor). The reflection module reflects imaging light at 90 degrees into the lens module, and the lens module performs focusing and imaging. At present, an anti-shake solution of the periscope module is that the reflection module and the lens module are responsible for anti-shake in two directions separately or jointly. Therefore, the focusing and anti-shake of the lens need to be driven by the reflection module and the lens module in a matching manner, which leads to the problems such as the difficulty in assembling and debugging two sets of motors, and large structural size and low reliability caused by a large number of components and complex design of the driving apparatus.

Therefore, there is a problem in the related art that the periscope lens driving apparatus has poor use performance.

Some embodiments of the present invention are to provide a periscope lens driving apparatus, a camera apparatus, and a mobile terminal, so as to solve the problem in the related art of poor use performance of the periscope lens driving apparatus.

According to one embodiment of the present invention, a periscope lens driving apparatus is provided, including a housing assembly, the housing assembly having an accommodating space. The periscope lens driving apparatus further includes, in the accommodating space: a prism bracket; a ball assembly, the ball assembly abutting against the prism bracket, and the prism bracket being movable relative to the ball assembly; a lens carrier, the lens carrier being provided on a side, away from the ball assembly, of the prism bracket; a first driving assembly, at least a part of the first driving assembly being provided on the prism bracket, and at least another part of the first driving assembly being provided on the housing assembly, so that the prism bracket swings relative to the housing assembly in an X-axis and/or Y-axis direction; and a second driving assembly, at least a part of the second driving assembly being provided on the lens carrier, and at least another part of the second driving assembly being provided on the housing assembly, so that the lens carrier is movable in a Z-axis direction, and the Z-axis direction is a direction of movement, away from or close to the prism bracket, of the lens carrier.

In an embodiment mode, the ball assembly includes: a ball support, the ball support being provided on a side, away from the lens carrier, of the prism bracket; and a first ball, the first ball being provided on the ball support and in rolling contact with the prism bracket.

In an embodiment mode, the ball support includes: a support body, the support body being provided on an inner side wall of the housing assembly; and a mounting column, the mounting column being provided on the support body and extending toward the prism bracket, an end, away from the support body, of the mounting column having a first mounting hole, and the first ball being provided in the first mounting hole.

In an embodiment mode, a side, facing the ball support, of the prism bracket has an abutting groove, the end, away from the support body, of the mounting column extends into the abutting groove, and the first ball abuts against the bottom of the abutting groove.

In an embodiment mode, the bottom of the abutting groove is provided with a second mounting hole corresponding to the first ball, at least a part of the first ball is located inside the first mounting hole, and at least another part of the first ball is provided inside the second mounting hole.

In an embodiment mode, the periscope lens driving apparatus further includes a reinforcing plate, the reinforcing plate being embedded inside the prism bracket, and the reinforcing plate having the second mounting hole.

In an embodiment mode, the second mounting hole is located at a center of a side, corresponding to the support body, of the prism bracket; and/or a movable space is provided between the abutting groove and the mounting column.

In an embodiment mode, the support body has connecting arms on both sides, and the support body is provided on the housing assembly through the connecting arms.

In an embodiment mode, the first driving assembly includes: a first driving magnet; a first driving coil, the first driving magnet being provided on the prism bracket, and the first driving coil being provided on the housing assembly corresponding to the first driving magnet; a second driving magnet; and a second driving coil, the second driving magnet being provided on the prism bracket, and the second driving coil being provided on the housing assembly corresponding to the second driving magnet. The first driving magnet and the second driving magnet are respectively provided on different outer surfaces of the prism bracket.

In an embodiment mode, the prism bracket is provided with first mounting grooves corresponding to the first driving magnet and the second driving magnet respectively.

In an embodiment mode, the second driving magnet is provided at the bottom of the prism bracket, and at least a part of the ball assembly extends into the prism bracket. The periscope lens driving apparatus further includes a magnetic attraction sheet, the magnetic attraction sheet being provided on a part, extending into the prism bracket, of the ball assembly corresponding to the second driving magnet, and the prism bracket being provided with an avoidance opening corresponding to the magnetic attraction sheet.

In an embodiment mode, the prism bracket is provided with shock-absorbing protrusions on side walls on both sides in the Z-axis direction, the housing assembly is provided with shock-absorbing notches corresponding to the shock-absorbing protrusions, and the shock-absorbing protrusions are lapped in the shock-absorbing notches.

In an embodiment mode, a filling space is provided between the shock-absorbing protrusion and the shock-absorbing notch, and the filling space is filled with damping glue.

In an embodiment mode, the second driving assembly includes: a third driving magnet; and a third driving coil, the third driving magnet being provided on the lens carrier, and the third driving coil being provided on the housing assembly corresponding to the third driving magnet.

In an embodiment mode, the periscope lens driving apparatus further includes a magnetic attraction plate. The magnetic attraction plate is embedded in the lens carrier, and the housing assembly is provided with an adsorption magnet corresponding to the magnetic attraction plate; or the magnetic attraction plate is provided on the housing assembly, and the lens carrier is provided with the adsorption magnet corresponding to the magnetic attraction plate; or the magnetic attraction plate is provided on the housing assembly corresponding to the third driving magnet.

In an embodiment mode, the housing assembly includes: a shell; and a base, the shell covering the base and forming the accommodating space with the base.

In an embodiment mode, the housing assembly further includes a Flexible Printed Circuit (FPC) board, the FPC board being provided on the base, and at least a part of the FPC board being located outside the accommodating space.

In an embodiment mode, the base is provided with limiting columns on side walls on both sides in the Z-axis direction respectively, and the limiting columns are located between the prism bracket and the lens carrier.

In an embodiment mode, a side, facing the limiting column, of the prism bracket and/or the lens carrier is provided with an anti-collision layer.

In an embodiment mode, the base is provided with a limiting baffle corresponding to an end, away from the prism bracket, of the lens carrier, and an end of the lens carrier corresponding to the limiting baffle is provided with an anti-collision layer.

In an embodiment mode, the prism bracket is provided with avoidance notches corresponding to the limiting columns.

In an embodiment mode, the periscope lens driving apparatus further includes a plurality of second balls. A side of the lens carrier corresponding to the base has a plurality of first sliding grooves, the base is provided with a plurality of second sliding grooves corresponding to the plurality of first sliding grooves, and at least one second ball is provided in each first sliding groove.

In an embodiment mode, the periscope lens driving apparatus further includes reset springs, the reset springs being respectively connected with the base and the side, away from the lens carrier, of the prism bracket.

In an embodiment mode, two reset springs are provided, and the two reset springs are correspondingly provided on both sides of the mounting column of the ball assembly.

According to another embodiment of the present invention, a camera apparatus is provided, including the above periscope lens driving apparatus.

According to another embodiment of the present invention, a mobile terminal is provided, inducing the above camera apparatus.

By applying the technical solution of the present invention, the periscope lens driving apparatus in the present invention includes the housing assembly, the housing assembly having the accommodating space. The periscope lens driving apparatus further includes the prism bracket, the ball assembly, the lens carrier, the first driving assembly, and the second driving assembly which are provided in the accommodating space. The ball assembly abuts against the prism bracket, and the prism bracket is movable relative to the ball assembly. The lens carrier is provided on the side, away from the ball assembly, of the prism bracket. At least a part of the first driving assembly is provided on the prism bracket, and at least another part of the first driving assembly is provided on the housing assembly, so that the prism bracket swings relative to the housing assembly in the X-axis and/or Y-axis direction. At least a part of the second driving assembly is provided on the lens carrier, and at least another part of the second driving assembly is provided on the housing assembly, so that the lens carrier is movable in the Z-axis direction, and the Z-axis direction is the direction of movement, away from or close to the prism bracket, of the lens carrier.

When the periscope lens driving apparatus in the present invention is used, since the first driving assembly is configured to drive the prism bracket to swing relative to the housing assembly in the X-axis and Y-axis directions, the lens anti-shake may be achieved through the separate movement of the prism bracket. Since the second driving assembly can enable the lens carrier to move in the Z-axis direction, when focusing is required, the lens carrier is only driven to move through the second driving assembly. Therefore, the periscope lens driving apparatus in the present invention effectively solves the problem in the related art of poor use performance of the periscope lens driving apparatus.

The drawings of the specification, which constitute a part of the present invention, are intended to provide a further understanding of the present invention, and the exemplary embodiments of the present invention and the description thereof are intended to explain the present invention and do not constitute an undue limitation on the present invention. In the drawings:
Fig. 1 shows an exploded view of a periscope lens driving apparatus according to one embodiment of the present invention.
Fig. 2 shows a schematic diagram of an internal structure of a periscope lens driving apparatus in Fig. 1.
Fig. 3 shows a schematic diagram of a positional relationship among a base, a prism bracket, and a reset spring of a periscope lens driving apparatus in the present invention.
Fig. 4 shows a schematic diagram of a positional relationship among a lens carrier, a second driving assembly, a second ball, an adsorption magnet, and a magnetic attraction plate of a periscope lens driving apparatus in one embodiment of the present invention.
Fig. 5 shows a schematic diagram of a positional relationship between a mounting column and a magnetic attraction sheet of a periscope lens driving apparatus in one embodiment of the present invention.
Fig. 6 shows a schematic diagram of a positional relationship between a first ball and a prism bracket of a periscope lens driving apparatus in one embodiment of the present invention.
Fig. 7 shows a schematic structural diagram of a reinforcing plate of a periscope lens driving apparatus in one embodiment of the present invention.
Fig. 8 shows a schematic diagram of a positional relationship between a lens carrier and a second ball of a periscope lens driving apparatus in one embodiment of the present invention.
Fig. 9 shows a schematic diagram of a positional relationship between a base and a second ball in an embodiment of Fig. 8.
Fig. 10 shows a schematic diagram of a positional relationship between a lens carrier and a second ball of a periscope lens driving apparatus in one embodiment of the present invention.
Fig. 11 shows a schematic diagram of a positional relationship between a base and a second ball in an embodiment of Fig.10.

Herein, the above drawings include the following reference signs.
10. Housing assembly; 11. Shock-absorbing notch; 12. Damping glue; 13. Shell; 14. Base; 141. Limiting column; 142. Limiting baffle; 143. Second sliding groove; 15. FPC board; 20. Prism bracket; 21. Abutting groove; 22. Second mounting hole; 23. Reinforcing plate; 24. First mounting groove; 25. Avoidance opening; 26. Shock-absorbing protrusion; 27. Avoidance notch; 30. Ball assembly; 31. Ball support; 311. Support body; 3111. Connecting arm; 3 12. Mounting column; 3121. First mounting hole; 32. First ball; 40. Lens carrier; 41. First sliding groove; 50. First driving assembly; 51. First driving magnet; 52. First driving coil; 53. Second driving magnet; 54. Second driving coil; 60. Second driving assembly; 61. Third driving magnet; 62. Third driving coil; 70. Magnetic attraction sheet; 80. Magnetic attraction plate; 81. Adsorption magnet; 90. Anti-collision layer; 100. Second ball; 200. Reset spring.

It is to be noted that the embodiments in the present invention and features in the embodiments may be combined with each other without conflict. The present invention is described below with reference to the drawings and in conjunction with the embodiments in detail.

It is to be noted that, unless otherwise defined, all technical and scientific terms used herein have the same meaning as commonly understood by those of ordinary skill in the art of the present invention.

In the present invention, unless otherwise specified, the orientation words used such as "up, down, top, bottom" usually refer to the directions shown in the drawings or to the component itself in an upright, vertical, or gravitational direction. Similarly, for ease of understanding and description, "inside and outside" refer to the inside and outside relative to the outline of each component itself, but the above orientation words are not intended to limit the present invention.

In order to solve the problem in the related art of poor use performance of a periscope lens driving apparatus, the present invention provides a periscope lens driving apparatus, a camera apparatus, and a mobile terminal.

Moreover, the mobile terminal in the present invention has the camera apparatus, and the camera apparatus in the present invention has the following periscope lens driving apparatus. In the present invention, the mobile terminal generally refers to a mobile phone or a laptop computer with photo and video functions.

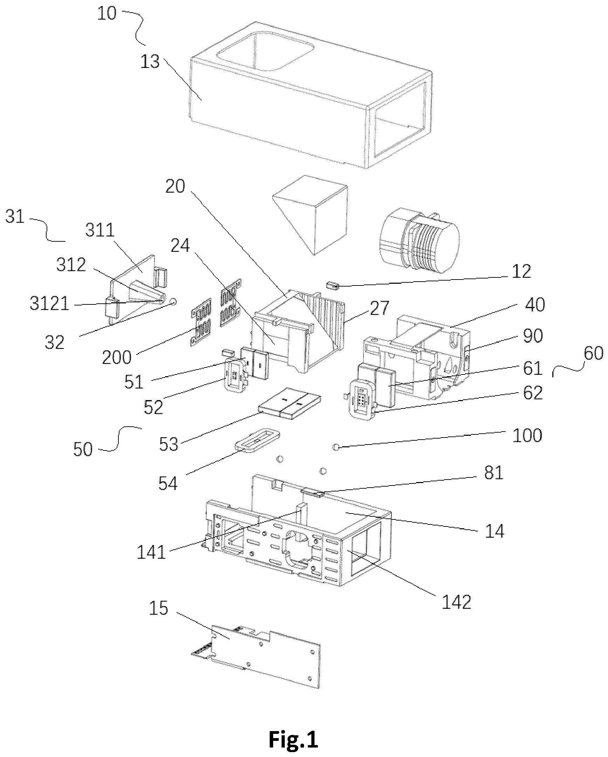

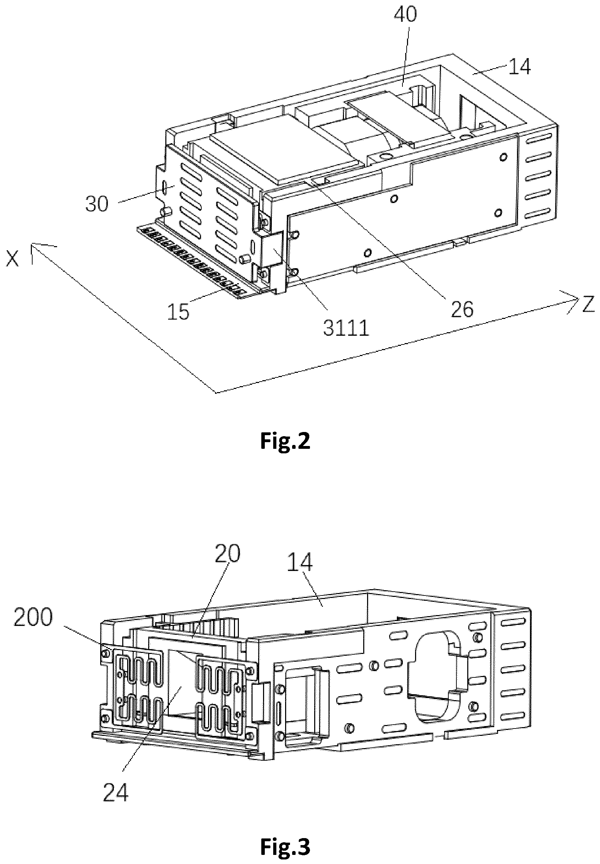

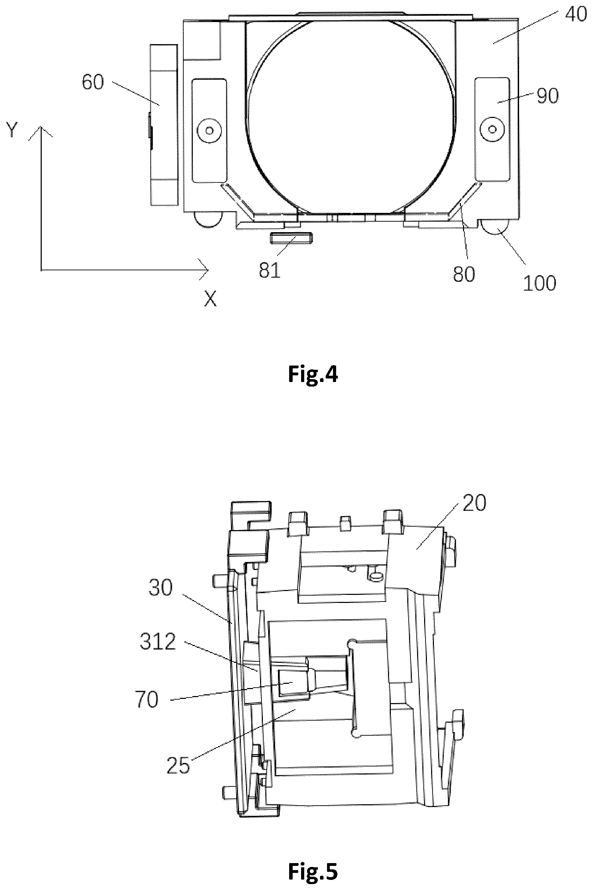

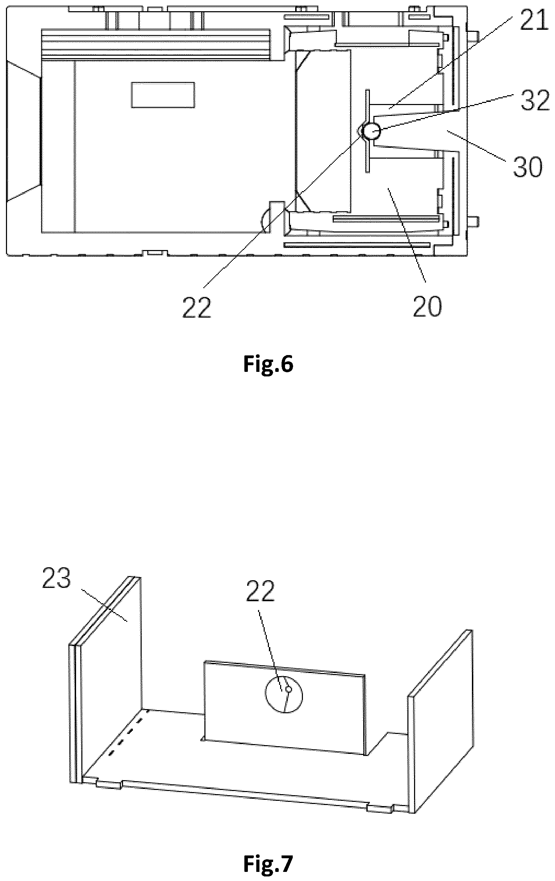

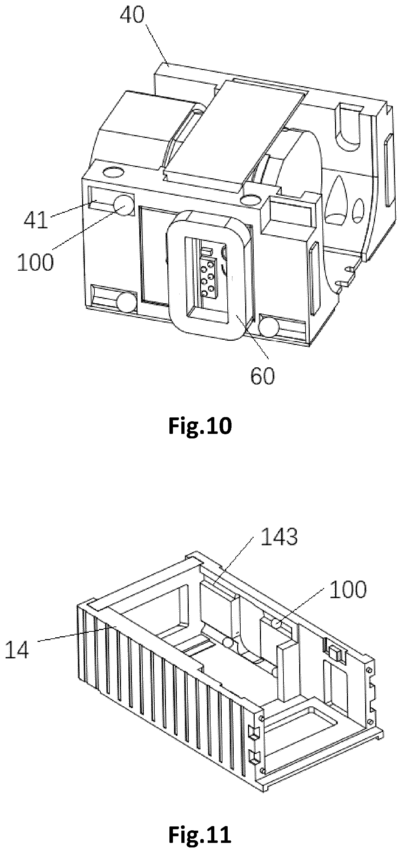

As shown in Fig. 1 to Fig. 11, the periscope lens driving apparatus in the present invention includes a housing assembly 10, the housing assembly 10 having an accommodating space. The periscope lens driving apparatus further includes a prism bracket 20, a ball assembly 30, a lens carrier 40, a first driving assembly 50, and a second driving assembly 60 which are provided in the accommodating space. The ball assembly 30 abuts against the prism bracket 20, and the prism bracket 20 is movable relative to the ball assembly 30. The lens carrier 40 is provided on a side, away from the ball assembly 30, of the prism bracket 20. At least a part of the first driving assembly 50 is provided on the prism bracket 20, and at least another part of the first driving assembly 50 is provided on the housing assembly 10, so that the prism bracket 20 swings relative to the housing assembly 10 in an X-axis and/or Y-axis direction. At least a part of the second driving assembly 60 is provided on the lens carrier 40, and at least another part of the second driving assembly 60 is provided on the housing assembly 10, so that the lens carrier 40 is movable in a Z-axis direction, and the Z-axis direction is a direction of movement, away from or close to the prism bracket 20, of the lens carrier 40.

When the periscope lens driving apparatus in the present invention is used, since the first driving assembly 50 is configured to drive the prism bracket 20 to swing relative to the housing assembly 10 in the X-axis and Y-axis directions, the lens anti-shake may be achieved through the separate movement of the prism bracket 20. Since the second driving assembly 60 can enable the lens carrier 40 to move in the Z-axis direction, when focusing is required, the lens carrier 40 is only driven to move through the second driving assembly 60. Therefore, the periscope lens driving apparatus in the present invention effectively solves the problem in the related art of poor use performance of the periscope lens driving apparatus.

In an embodiment mode, the first driving assembly 50 includes a first driving magnet 51, a first driving coil 52, a second driving magnet 53, and a second driving coil 54. The first driving magnet 51 is provided on the prism bracket 20, and the first driving coil 52 is provided on the housing assembly 10 corresponding to the first driving magnet 51. The second driving magnet 53 is provided on the prism bracket 20, and the second driving coil 54 is provided on the housing assembly 10 corresponding to the second driving magnet 53. The first driving magnet 51 and the second driving magnet 53 are respectively provided on different outer surfaces of the prism bracket 20. In one embodiment of the present invention, the prism bracket 20 can swing along an X-axis when the first driving coil 52 and the first driving magnet 51 interact, and the prism bracket 20 can swing along a Y-axis when the second driving coil 54 and the second driving magnet 53 interact.

In one embodiment of the present invention, the ball assembly 30 includes a ball support 31 and a first ball 32. The ball support 31 is provided on a side, away from the lens carrier 40, of the prism bracket 20. The first ball 32 is provided on the ball support 31, and the first ball 32 is in rolling contact with the prism bracket 20. In an embodiment mode, the ball support 31 includes a support body 311 and a mounting column 312. The support body 311 is provided on an inner side wall of the housing assembly 10. The mounting column 312 is provided on the support body 311 and extends toward the prism bracket 20, an end, away from the support body 311, of the mounting column 312 has a first mounting hole 3121, and the first ball 32 is provided in the first mounting hole 3121. Moreover, a side, facing the ball support 31, of the prism bracket 20 has an abutting groove 21, the end, away from the support body 311, of the mounting column 312 extends into the abutting groove 21, and the first ball 32 abuts against the bottom of the abutting groove 21. That is, in the present invention, when the prism bracket 20 swings along the X-axis and the Y-axis, the first ball 32 is always in contact with the prism bracket 20, so that the first ball 32 can provide a fulcrum for the prism bracket 20 to enable the prism bracket 20 to swing at a point of contact with the first ball 32. Therefore, in the present invention, in addition to the different direction of movements, the manners of movement of the prism bracket 20 and the lens carrier 40 are also different. Moreover, the purpose of providing the first ball 32 in the present invention is to ensure that the prism carrier can roll more smoothly. Therefore, when the smoothness of the movement of the prism bracket 20 does not need to be considered, the first ball 32 may not be provided.

It is also to be noted that in the present invention, the mounting column 312 is provided on the support body 311 and the end of the mounting column 312 extends inside the prism bracket 20, which may also limit the movement of the prism bracket 20, thereby preventing the prism bracket 20 from deviating during the movement, and then ensuring the stability of the movement of the prism bracket 20.

In an embodiment mode, the bottom of the abutting groove 21 is provided with a second mounting hole 22 corresponding to the first ball 32, at least a part of the first ball 32 is located inside the first mounting hole 3121, and at least another part of the first ball 32 is provided inside the second mounting hole 22. Through the arrangement, it may be ensured that there is no relative position between the ball and the prism bracket 20 through the mutual cooperation of the first mounting hole 3121 and the second mounting hole 22, and that there is only relative rolling between the prism bracket 20 and the first ball 32 due to the swinging of the prism bracket 20 in the X-axis and Y-axis directions. In other words, in the present invention, the second mounting hole 22 is provided to position the first ball 32.

In one embodiment of the present invention, the periscope lens driving apparatus further includes a reinforcing plate 23, the reinforcing plate 23 being embedded inside the prism bracket 20, and the reinforcing plate 23 having the second mounting hole 22. That is to say, in the embodiment, the first ball 32 actually abuts against the reinforcing plate 23 inside the prism bracket 20, and the reinforcing plate 23 has the second mounting hole 22. In an embodiment mode, the reinforcing plate 23 and the prism bracket 20 are of an integrally formed structure. It is also to be noted that in the embodiment, the provision of the reinforcing plate 23 may also increase the rolling strength of the first ball 32, thereby improving the structural stability of the prism bracket 20 and the first ball 32 during the relative movement. In addition, the reinforcing plate 23 embedded inside the prism bracket 20 may also play a counterweight role for the prism bracket 20, thereby concentrating a center of gravity of the prism bracket 20 to ensure the stability of the movement of the prism bracket 20. Moreover, after the reinforcing plate 23 is embedded inside the prism bracket 20, the thickness of the prism bracket 20 may also be reduced, which is more conducive to the miniaturization design of the periscope lens driving apparatus.

In an embodiment mode, the second mounting hole 22 is located at a center of a side, corresponding to the support body 311, of the prism bracket 20.

In an embodiment mode, a movable space is provided between the abutting groove 21 and the mounting column 312.

In an embodiment mode, the support body 311 has connecting arms 3111 on both sides, and the support body 311 is provided on the housing assembly 10 through the connecting arms 3111. Through the arrangement, when the prism bracket 20 swings, the stability of the support body 311 may be effectively ensured, thereby ensuring the stability of the movement of the prism bracket 20.

In an embodiment mode, the prism bracket 20 is provided with first mounting grooves 24 corresponding to the first driving magnet 51 and the second driving magnet 53 respectively.

In one embodiment of the present invention, the second driving magnet 53 is provided at the bottom of the prism bracket 20, and at least a part of the ball assembly 30 extends into the prism bracket 20. The periscope lens driving apparatus further includes a magnetic attraction sheet 70, the magnetic attraction sheet 70 being provided on a part, extending into the prism bracket 20, of the ball assembly 30 corresponding to the second driving magnet 53, and the prism bracket 20 being provided with an avoidance opening 25 corresponding to the magnetic attraction sheet 70. In an embodiment mode, the magnetic attraction sheet 70 is provided on the mounting column 312. In the embodiment, the magnetic attraction sheet 70 forms a certain adsorption force with the second driving magnet 53 corresponding to a lower side, so that the ball support 31 and the prism bracket 20 form a "dynamic" adsorption fixation, which is conductive to reducing the shaking and vibration of the prism bracket 20 and improving the stability and accuracy of the anti-shake driving.

In an embodiment mode, the prism bracket 20 is provided with shock-absorbing protrusions 26 on side walls on both sides in the Z-axis direction, the housing assembly 10 is provided with shock-absorbing notches 11 corresponding to the shock-absorbing protrusions 26, and the shock-absorbing protrusions 26 are lapped in the shock-absorbing notches 11. In addition, a filling space is provided between the shock-absorbing protrusion 26 and the shock-absorbing notch 11, and the filling space is filled with damping glue 12. Through the arrangement, the stability of the prism bracket 20 may be further ensured.

In an embodiment mode, the second driving assembly 60 includes a third driving magnet 61 and a third driving coil 62. The third driving magnet 61 is provided on the lens carrier 40, and the third driving coil 62 is provided on the housing assembly 10 corresponding to the third driving magnet 61.

In an embodiment mode, the periscope lens driving apparatus further includes a magnetic attraction plate 80. The magnetic attraction plate 80 is embedded in the lens carrier 40, and the housing assembly 10 is provided with an adsorption magnet 81 corresponding to the magnetic attraction plate 80.

In an embodiment mode, the periscope lens driving apparatus further includes a magnetic attraction plate 80. The magnetic attraction plate 80 is provided on the housing assembly 10, and the lens carrier 40 is provided with the adsorption magnet 81 corresponding to the magnetic attraction plate 80.

In the present invention, when the adsorption magnet 81 is provided inside the periscope lens driving apparatus, the adsorption magnet 81 is generally not in the same plane as the third driving magnet 61, so as to reduce magnetic interference.

In an embodiment mode, the periscope lens driving apparatus further includes a magnetic attraction plate 80. The magnetic attraction plate 80 is provided on the housing assembly 10 corresponding to the third driving magnet 61. Through the arrangement, the magnetic attraction plate 80 and the third driving coil 62 can share the third driving magnet 61, thereby simplifying the internal structure of the periscope lens driving apparatus.

In one embodiment of the present invention, the magnetic attraction plate 80 is embedded inside the lens carrier 40, which can help improve the structural strength of the lens carrier 40 and help miniaturize the structure of the lens carrier 40.

In an embodiment mode, the housing assembly 10 includes a shell 13 and a base 14. The shell 13 covers the base 14 and forms the accommodating space with the base 14.

In an embodiment mode, the housing assembly 10 further includes an FPC board 15, the FPC board 15 being provided on the base 14, and at least a part of the FPC board 15 being located outside the accommodating space. In the present invention, the first driving coil 52, the second driving coil 54, and the third driving coil 62 are all electrically connected with the FPC board 15.

In an embodiment mode, the base 14 is provided with limiting columns 141 on side walls on both sides in the Z-axis direction respectively, and the limiting columns 141 are located between the prism bracket 20 and the lens carrier 40. Through the arrangement, when the lens carrier 40 moves toward or away from the prism bracket 20 in the Z-axis direction, the limiting posts 141 can prevent the lens carrier 40 from colliding with the prism bracket 20, thereby ensuring the stability of the periscope lens driving apparatus.

In an embodiment mode, a side, facing the limiting column 141, of the prism bracket 20 is provided with an anti-collision layer 90.

In an embodiment mode, a side, facing the limiting column 141, of the lens carrier 40 is provided with the anti-collision layer 90.

In an embodiment mode, the base 14 is provided with a limiting baffle 142 corresponding to an end, away from the prism bracket 20, of the lens carrier 40, and an end of the lens carrier 40 corresponding to the limiting baffle 142 is provided with the anti-collision layer 90.

In one embodiment of the present invention, the anti-collision layer 90 is a soft rubber layer, preferably made of a Thermoplastic Polyurethane (TPU) material. In addition, the anti-collision layer 90 is integrally formed on both ends of the lens carrier 40 by injection molding, playing the role of anti-collision and structural drive noise reduction.

In an embodiment mode, the prism bracket 20 is provided with avoidance notches 27 corresponding to the limiting columns 141.

In an embodiment mode, the periscope lens driving apparatus further includes a plurality of second balls 100. A side of the lens carrier 40 corresponding to the base 14 has a plurality of first sliding grooves 41, the base 14 is provided with a plurality of second sliding grooves 143 corresponding to the plurality of first sliding grooves 41, and at least one second ball 100 is provided in each first sliding groove 41.

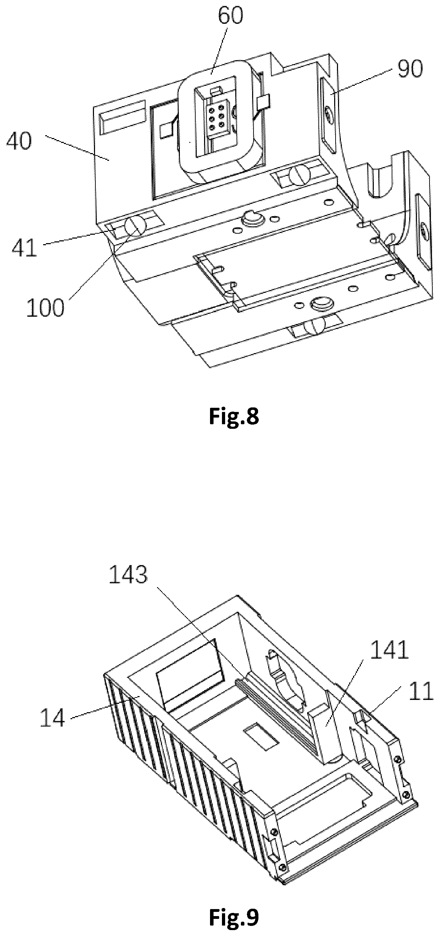

It is to be noted that, as shown in Fig. 8 to Fig. 11, in the present invention, the second ball 100 may be provided on a bottom surface or a side wall of the lens carrier 40 opposite to the base 14.

In an embodiment mode, the periscope lens driving apparatus further includes reset springs 200, the reset springs 200 are respectively connected with the base 14 and the side, away from the lens carrier 40, of the prism bracket 20.

In an embodiment mode, two reset springs 200 are provided, and the two reset springs 200 are correspondingly provided on both sides of the mounting column 312 of the ball assembly 30.

It is to be noted that in the present invention, position detection assemblies are provided at corresponding positions of the first driving coil 52, the second driving coil 54, and the third driving coil 62. In an embodiment mode, the position detection assemblies are Hall chips.

From the above description, it may be seen that the above embodiments of the present invention achieve the following technical effects.
1. Complex spring and suspension wire structures of an existing focusing and anti-shake driving apparatus are eliminated and directly replaced with the second balls, which can not only support the lens carrier, but also drive the lens carrier to move for focusing and anti-shake. The structure is simple, the driving resistance is reduced, and the power consumption is reduced.
2. The prism bracket and the lens carrier share the same base and FPC board, which reduces the alignment process in the assembly process, facilitates the assembly, improves the yield rate, and effectively reduces the production cost and apparatus size, thereby achieving the purpose of cost saving and miniaturization.
3. The cost may be effectively reduced and the assembly is also facilitated. Compared with the conventional assembly manner, the embodiment does not require the alignment of the prism and the lens, and the alignment process is automatically completed when the prism and the lens are installed on a bottom plate.
4. A front and rear spring connection manner is replaced with the second ball, which has small driving resistance, low power consumption, few components, and simplified structure, and is conducive to assembly and miniaturization.
5. Two sets of driving assemblies of a prism motor and a periscope motor are respectively sensed by the Hall chips to achieve closed-loop control, thereby achieving the purpose of high-precision focusing and anti-shake driving.

It is apparent that the described embodiments are only a part of the embodiments of the present invention, and not all of them. All other embodiments obtained by those of ordinary skill in the art on the basis of the embodiments in the present invention without creative work shall fall within the scope of protection of the present invention.

It is to be noted that terms used herein are only for the purpose of describing the specific implementations and not intended to limit exemplary implementations of the present invention. As used herein, the singular form is also intended to include the plural form unless otherwise expressly stated in the context, and it should also be understood that when the terms "contain" and/or "include" are used in the specification, they indicate the presence of features, steps, operations, devices, components and/or combinations thereof.

It is to be noted that the terms "first", "second" and the like in the specification, claims and the above drawings of the present invention are used for distinguishing similar objects rather than describing a specific sequence or a precedence order. It should be understood that the data used in such a way may be exchanged where appropriate, in order that the implementations of the present invention described here may be implemented in an order other than those illustrated or described herein.

The above is only the preferred embodiments of the present invention, and is not intended to limit the present invention, and for those of ordinary skill in the art, various modifications and changes may be made to the present invention. Any modifications, equivalent substitutions, improvements, etc. within the spirit and scope of the present invention shall be included in the scope of protection of the present invention.

**Summary**

**Technical Problem**

**Solution of Problem**

**Beneficial Effect**

## Claims

1. A periscope lens driving apparatus, comprising a housing assembly (10), the housing assembly (10) having an accommodating space; the periscope lens driving apparatus further comprises, in the accommodating space:
a prism bracket (20);
a ball assembly (30), the ball assembly (30) abutting against the prism bracket (20), and the prism bracket (20) being movable relative to the ball assembly (30);
a lens carrier (40), the lens carrier (40) being provided on a side, away from the ball assembly (30), of the prism bracket (20);
a first driving assembly (50), at least a part of the first driving assembly (50) being provided on the prism bracket (20), and at least another part of the first driving assembly (50) being provided on the housing assembly (10), so that the prism bracket (20) swings relative to the housing assembly (10) in an X-axis and/or Y-axis direction; and
a second driving assembly (60), at least a part of the second driving assembly (60) being provided on the lens carrier (40), and at least another part of the second driving assembly (60) being provided on the housing assembly (10), so that the lens carrier (40) is movable in a Z-axis direction, and the Z-axis direction is a direction of movement, away from or close to the prism bracket (20), of the lens carrier (40).

2. The periscope lens driving apparatus as claimed in claim 1, wherein the ball assembly (30) comprises:
a ball support (31), the ball support (31) being provided on a side, away from the lens carrier (40), of the prism bracket (20); and
a first ball (32), the first ball (32) being provided on the ball support (31) and in rolling contact with the prism bracket (20).

3. The periscope lens driving apparatus as claimed in claim 2, wherein the ball support (31) comprises:
a support body (311), the support body (311) being provided on an inner side wall of the housing assembly (10); and
a mounting column (312), the mounting column (312) being provided on the support body (311) and extending toward the prism bracket (20), an end, away from the support body (311), of the mounting column (312) having a first mounting hole (3121), and the first ball (32) being provided in the first mounting hole (3121).

4. The periscope lens driving apparatus as claimed in claim 3, wherein a side, facing the ball support (31), of the prism bracket (20) has an abutting groove (21), the end, away from the support body (311), of the mounting column (312) extends into the abutting groove (21), and the first ball (32) abuts against a bottom of the abutting groove (21).

5. The periscope lens driving apparatus as claimed in claim 4, wherein the bottom of the abutting groove (21) is provided with a second mounting hole (22) corresponding to the first ball (32), at least a part of the first ball (32) is located inside the first mounting hole (3121), and at least another part of the first ball (32) is provided inside the second mounting hole (22).

6. The periscope lens driving apparatus as claimed in claim 5, wherein the periscope lens driving apparatus comprises a reinforcing plate (23), the reinforcing plate (23) being embedded inside the prism bracket (20), and the reinforcing plate (23) having the second mounting hole (22).

7. The periscope lens driving apparatus as claimed in claim 5, wherein,
the second mounting hole (22) is located at a center of a side, corresponding to the support body (311), of the prism bracket (20); and/or
a movable space is provided between the abutting groove (21) and the mounting column (312).

8. The periscope lens driving apparatus as claimed in claim 3, wherein the support body (311) has connecting arms (3111) on both sides, and the support body (311) is provided on the housing assembly (10) through the connecting arms (3111).

9. The periscope lens driving apparatus as claimed in claim 1, wherein the first driving assembly (50) comprises:
a first driving magnet (51);
a first driving coil (52), the first driving magnet (51) being provided on the prism bracket (20), and the first driving coil (52) being provided on the housing assembly (10) corresponding to the first driving magnet (51);
a second driving magnet (53); and
a second driving coil (54), the second driving magnet (53) being provided on the prism bracket (20), and the second driving coil (54) being provided on the housing assembly (10) corresponding to the second driving magnet (53);
the first driving magnet (51) and the second driving magnet (53) are respectively provided on different outer surfaces of the prism bracket (20).

10. The periscope lens driving apparatus as claimed in claim 9, wherein the prism bracket (20) is provided with first mounting grooves (24) corresponding to the first driving magnet (51) and the second driving magnet (53) respectively.

11. The periscope lens driving apparatus as claimed in claim 9, wherein the second driving magnet (53) is provided at a bottom of the prism bracket (20), and at least a part of the ball assembly (30) extends into the prism bracket (20); the periscope lens driving apparatus further comprises a magnetic attraction sheet (70), the magnetic attraction sheet (70) being provided on a part, extending into the prism bracket (20), of the ball assembly (30) corresponding to the second driving magnet (53), and the prism bracket (20) being provided with an avoidance opening (25) corresponding to the magnetic attraction sheet (70).

12. The periscope lens driving apparatus as claimed in claim 1, wherein the prism bracket (20) is provided with shock-absorbing protrusions (26) on side walls on both sides in the Z-axis direction, the housing assembly (10) is provided with shock-absorbing notches (11) corresponding to the shock-absorbing protrusions (26), and the shock-absorbing protrusions (26) are lapped in the shock-absorbing notches (11).

13. The periscope lens driving apparatus as claimed in claim 12, wherein a filling space is provided between the shock-absorbing protrusion (26) and the shock-absorbing notch (11), and the filling space is filled with damping glue (12).

14. The periscope lens driving apparatus as claimed in any one of claims 1 to 13, wherein the second driving assembly (60) comprises:
a third driving magnet (61); and
a third driving coil (62), the third driving magnet (61) being provided on the lens carrier (40), and the third driving coil (62) being provided on the housing assembly (10) corresponding to the third driving magnet (61).

15. The periscope lens driving apparatus as claimed in claim 14, wherein the periscope lens driving apparatus comprises a magnetic attraction plate (80);
the magnetic attraction plate (80) is embedded in the lens carrier (40), and the housing assembly (10) is provided with an adsorption magnet (81) corresponding to the magnetic attraction plate (80); or
the magnetic attraction plate (80) is provided on the housing assembly (10), and the lens carrier (40) is provided with the adsorption magnet (81) corresponding to the magnetic attraction plate (80); or
the magnetic attraction plate (80) is provided on the housing assembly (10) corresponding to the third driving magnet (61).

16. The periscope lens driving apparatus as claimed in any one of claims 1 to 13, wherein the housing assembly (10) comprises:
a shell (13); and
a base (14), the shell (13) covering the base (14) and forming the accommodating space with the base (14).

17. The periscope lens driving apparatus as claimed in claim 16, wherein the housing assembly (10) further comprises a Flexible Printed Circuit (FPC) board (15), the FPC board (15) being provided on the base (14), and at least a part of the FPC board (15) being located outside the accommodating space.

18. The periscope lens driving apparatus as claimed in claim 16, wherein the base (14) is provided with limiting columns (141) on side walls on both sides in the Z-axis direction respectively, and the limiting columns (141) are located between the prism bracket (20) and the lens carrier (40).

19. The periscope lens driving apparatus as claimed in claim 18, wherein a side, facing the limiting column (141), of the prism bracket (20) and/or the lens carrier (40) is provided with an anti-collision layer (90).

20. The periscope lens driving apparatus as claimed in claim 18, wherein the base (14) is provided with a limiting baffle (142) corresponding to an end, away from the prism bracket (20), of the lens carrier (40), and an end of the lens carrier (40) corresponding to the limiting baffle (142) is provided with an anti-collision layer (90).

21. The periscope lens driving apparatus as claimed in claim 18, wherein the prism bracket (20) is provided with avoidance notches (27) corresponding to the limiting columns (141).

22. The periscope lens driving apparatus as claimed in claim 16, wherein the periscope lens driving apparatus comprises a plurality of second balls (100), wherein a side of the lens carrier (40) corresponding to the base (14) has a plurality of first sliding grooves (41), the base (14) is provided with a plurality of second sliding grooves (143) corresponding to the plurality of first sliding grooves (41), and at least one second ball (100) is provided in each first sliding groove (41).

23. The periscope lens driving apparatus as claimed in claim 16, wherein the periscope lens driving apparatus comprises reset springs (200), the reset springs (200) being respectively connected with the base (14) and the side, away from the lens carrier (40), of the prism bracket (20).

24. The periscope lens driving apparatus as claimed in claim 23, wherein two reset springs (200) are provided, and the two reset springs (200) are correspondingly provided on both sides of the mounting column (312) of the ball assembly (30).

25. A camera apparatus, comprising the periscope lens driving apparatus as claimed in any one of claims 1 to 24.

26. A mobile terminal, comprising the camera apparatus as claimed in claim 25.
